(19) Europäisches Patentamt
European Patent Office
Office européen des brevets

(11) **EP 4 749 531 A1**

(12) **EUROPEAN PATENT APPLICATION**
published in accordance with Art. 153(4) EPC

(43) Date of publication:
**27.05.2026 Bulletin 2026/22**

(21) Application number: **24853648.4**

(22) Date of filing: **08.08.2024**

(51) International Patent Classification (IPC):
*G06N 3/084* (2023.01)

(52) Cooperative Patent Classification (CPC):
**G06F 18/214; G06N 3/042; G06N 3/045; G06N 3/048; G06N 3/084**

(86) International application number:
**PCT/CN2024/110625**

(87) International publication number:
**WO 2025/036237 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311018397**

(71) Applicant: **HUAWEI TECHNOLOGIES CO., LTD.**
**Shenzhen 518129 (CN)**

(72) Inventors:
• **SUN, Hao**
  **Shenzhen, Guangdong 518129 (CN)**
• **CHENG, Siyuan**
  **Shenzhen, Guangdong 518129 (CN)**
• **LI, Juncheng**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **MODEL TRAINING METHOD, VEHICLE CONTROL METHOD, AND RELATED DEVICE**

(57) Provided are a model training method, a vehicle control method, and a related apparatus, which may be applied to the field of artificial intelligence. The method includes: obtaining road condition information of a target vehicle; obtaining target information based on the road condition information by using a first neural network model, where the target information is a driving intention prediction of the target vehicle, a driving route prediction, or an interaction behavior prediction between the target vehicle and an environment; and updating the first neural network model based on the target information by using an expert system or a result obtained through processing the road condition information and a label corresponding to the road condition information by the expert system. In this application, an output of the expert system is used to guide determining of a gradient used to update an AI model, which is equivalent to performing closed-loop training on the AI model, thereby improving accuracy of the AI model.

FIG. 4

EP 4 749 531 A1

**Description**

This application claims priority to Chinese Patent Application No. 202311018397.2, filed with the China National Intellectual Property Administration on August 11, 2023 and entitled "MODEL TRAINING METHOD, VEHICLE CONTROL METHOD, AND RELATED APPARATUS", which is incorporated herein by reference in its entirety.

**TECHNICAL FIELD**

This application relates to the field of artificial intelligence, and in particular, to a model training method, a vehicle control method, and a related apparatus.

**BACKGROUND**

Artificial intelligence (artificial intelligence, AI) is a theory, a method, a technology, and an application system in which human intelligence is simulated and extended by using a digital computer or a machine controlled by a digital computer, to perceive an environment, obtain knowledge, and obtain an optimal result by using the knowledge. In other words, the artificial intelligence is a branch of computer science, and attempts to learn essence of intelligence and produce a new intelligent machine that can react in a manner similar to human intelligence. The artificial intelligence is to research design principles and implementation methods of various intelligent machines, so that the machines have perception, inference, and decision-making functions.

Key technologies in the autonomous driving field include perception, decision-making, planning, and control. An autonomous decision-making capability of a vehicle plays a key role in intelligence and safety of an entire autonomous driving system. Compared with an expert system, a data-driven AI method has a human-like decision-making capability in a complex scenario, and is a development trend of an autonomous driving technology. However, the data-driven AI method is not interpretable and needs to be used together with a planning and control expert system at present and for a considerable period of time in the future.

Currently, mainstream data-driven methods are mostly open-loop learning methods (for example, imitation learning). Ideas of such methods are relatively direct: learning an end-to-end mapping model from observations to posterior trajectory outputs based on massive human driving data. However, it is difficult to consider actual closed-loop effect of an output of the model in such a method learning model, causing a decrease in actual application effect.

**SUMMARY**

This application provides a model training method, a vehicle control method, and a related apparatus, to perform closed-loop training on an AI model in a planning and control system of a vehicle, thereby improving accuracy of the AI model.

According to a first aspect, this application provides a model training method. Specifically, the method includes: obtaining road condition information of a target vehicle; obtaining target information based on the road condition information by using a first neural network model, where the target information is a driving intention prediction of the target vehicle, a driving route prediction, or an interaction behavior prediction between the target vehicle and an environment; and updating the first neural network model based on the target information by using an expert system or a result obtained through processing the road condition information and a label corresponding to the road condition information by the expert system.

Because driving information is usually inaccurate (for example, the driving information is not optimal information in terms of safety or comfort), an expert module is required to provide guarantee and correction for the driving information. In an existing implementation, during training of an AI model, the driving information is usually used as a label to update the AI model, and an output of an expert system is not introduced subsequently. Therefore, the label used to update the first neural network model has low confidence in essence, causing low processing accuracy of a trained model.

The label corresponding to the road condition information may be data (for example, the data may be the driving intention prediction, the driving route prediction, or the interaction behavior prediction between the target vehicle and the environment) in an actual driving process (which may be a driving process in a simulated environment, or may be a driving process in an actual physical environment). The data may be used as a true value corresponding to the target information in a training sample.

In this embodiment of this application, the expert system or an output of the expert system is used in training of the first neural network model, which is equivalent to performing closed-loop training on the first neural network model, so that the first neural network model has a feature of a planning and control expert system, thereby improving accuracy of the first neural network model.

The expert system may be implemented based on a rule, or may be implemented based on a neural network.

In a possible implementation, a loss used to update the first neural network model is determined based on the target information and the label corresponding to the road condition information, and the loss is adjusted based on feasibility of the label. The feasibility of the label may be obtained based on the result obtained through processing the road condition information and the label corresponding to the road condition information by the expert system.

The feasibility of the label corresponding to the road condition information may be considered as an evaluation on the label. Therefore, the feasibility may be introduced into a training process of the first neural network model. Specifically, the loss may be determined based on the target information and the corresponding label (because the label may be inaccurate, the loss may also be inaccurate, and if an AI model is updated based on the inaccurate loss, training accuracy of the model is poor). Therefore, in this embodiment of this application, the loss is adjusted based on the feasibility, and an adjusted loss is used (adjustment of the loss is equivalent to introducing the output of the expert system).

In a possible implementation, the feasibility indicates whether the label corresponding to the road condition information is feasible or not.

In a possible implementation, the feasibility indicates whether safety or comfort of the vehicle meets a requirement when the target vehicle performs corresponding driving control based on the label. For example, the feasibility may be represented by 1 or 0, where 1 indicates feasible and 0 indicates infeasible. For example, the feasibility indicates whether the label is feasible or not. When the feasibility indicates that the label is feasible, it may be determined that the AI model needs to be updated. When the feasibility indicates that the label is infeasible, it may be determined that the AI model does not need to be updated, or an absolute value of an update gradient is correspondingly reduced.

In a possible implementation, the feasibility is a feasibility score. That the loss is adjusted by using the feasibility includes: The loss is adjusted by using the feasibility score as a weight. The feasibility score of the label may be determined based on the processing result of the expert system, that is, a satisfaction degree of safety or comfort of the vehicle when the target vehicle performs driving control corresponding to the label. For example, the feasibility may indicate the feasibility score of the label, and the feasibility score may be used as a weight to adjust the loss. When the feasibility score is large, it may be considered that accuracy of the label is high, and an update gradient obtained based on the feasibility score is also large. When the feasibility score is small, it may be considered that accuracy of the label is low, and an update gradient obtained based on the feasibility score is also small.

In a possible implementation, the feasibility is related to the following information: the safety or comfort of the target vehicle present when driving control is performed on the target vehicle based on the label.

In a possible implementation, the expert system is a second neural network model. To be specific, during training of the first neural network model, the expert system is parameterized (a parameterized expert system is the second neural network model). A control instruction of the target vehicle may be determined based on the road condition information and the target information by using the second neural network model. The target vehicle is controlled, according to the control instruction, to interact with an environment in which the target vehicle is located, to determine an interaction result. In addition, the first neural network model is updated based on the interaction result.

For example, a reward value may be determined based on the interaction result, the update gradient of the first neural network model is determined based on the reward value, and the first neural network model is updated based on the update gradient.

When the expert system is a non-neural network, an update gradient of the first neural network model cannot be directly determined based on a reward value corresponding to the output of the expert system (the expert system is a non-neural network and cannot perform gradient backpropagation, and an expert system based on a policy algorithm usually has a large quantity of modules such as state machine transition, random sampling, and optimization, and therefore, if feature learning is performed on the expert system through random exploration is very slow, this greatly increases difficulties of online learning and interaction). However, if the expert system is parameterized in the training process, the output of the expert system may be used to determine a reward value. During gradient backpropagation, a gradient may be propagated to the first neural network model. In this way, an update gradient corresponding to the first neural network model may be obtained, and the update gradient is obtained based on the output of the expert system. This is equivalent to introducing the output of the expert system into the training process of the AI model, thereby improving processing accuracy of the trained model.

According to a second aspect, this application provides a vehicle control method. The method includes: obtaining road condition information of a target vehicle; obtaining target information based on the road condition information by using an updated first neural network model obtained by using the method according to any one of the first aspect or the possible implementations of the first aspect, where the target information is a driving intention prediction of the target vehicle, a driving route prediction, or an interaction behavior prediction between the target vehicle and an environment; and determining a control instruction of the target vehicle based on the road condition information and the target information by using an expert system.

According to a third aspect, this application provides a model training apparatus. The apparatus includes the following modules.

An obtaining module is configured to obtain road condition information of a target vehicle.

A processing module is configured to obtain target information based on the road condition information by using a first neural network model. The target information is a driving intention prediction of the target vehicle, a driving route prediction, or an interaction behavior prediction between the target vehicle and an environment.

An update module is configured to update the first neural network model based on the target information by using an expert system or a result obtained through processing the road condition information and a label corresponding to the road condition information by the expert system.

In a possible implementation, the update module is specifically configured to: determine a loss based on the target information and the label; adjust the loss based on feasibility of the label, to obtain an adjusted loss, where the feasibility of the label is obtained based on the result obtained through processing the road condition information and the label corresponding to the road condition information by the expert system; and update the first neural network model based on the adjusted loss.

In a possible implementation, the feasibility indicates whether the label corresponding to the road condition information is feasible or not.

In a possible implementation, the feasibility is a feasibility score. The update module is specifically configured to adjust the loss by using the feasibility score as a weight.

In a possible implementation, the feasibility is related to the following information: safety or comfort of the target vehicle present when driving control is performed on the target vehicle based on the label.

In a possible implementation, the expert system is a second neural network model. The update module is specifically configured to: determine a control instruction of the target vehicle based on the road condition information and the target information by using the second neural network model; control, according to the control instruction, the target vehicle to interact with an environment around the target vehicle, to determine an interaction result; and update the first neural network model based on the interaction result.

In a possible implementation, the update module is further configured to update the second neural network model according to the control instruction and based on a label corresponding to the control instruction. The label corresponding to the control instruction is obtained through processing the road condition information and the target information by a rule-based expert system.

According to a fourth aspect, this application provides a vehicle control apparatus. The apparatus includes: an obtaining module, configured to obtain road condition information of a target vehicle; and a processing module, configured to: obtain target information based on the road condition information by using an updated first neural network model obtained by using the method according to any one of the first aspect or the possible implementations of the first aspect, where the target information is a driving intention prediction of the target vehicle, a driving route prediction, or an interaction behavior prediction between the target vehicle and an environment; and determine a control instruction of the target vehicle based on the road condition information and the target information by using an expert system.

According to a fifth aspect, an embodiment of this application provides a computing apparatus. The computing apparatus may include a memory, a processor, and a bus system. The memory is configured to store a program, and the processor is configured to execute the program in the memory, to perform the method according to any one of the first aspect or the possible implementations of the first aspect, and the method according to any one of the second aspect or the possible implementations of the second aspect.

According to a sixth aspect, an embodiment of this application provides a vehicle. The vehicle includes a sensor and the vehicle control apparatus according to the fourth aspect. The sensor is configured to collect road condition information of the vehicle.

According to a seventh aspect, an embodiment of this application provides a computer-readable storage medium. The computer-readable storage medium stores a computer program. When the computer program runs on a computer, the computer is enabled to perform the method according to any one of the first aspect or the possible implementations of the first aspect, and the method according to any one of the second aspect or the possible implementations of the second aspect.

According to an eighth aspect, an embodiment of this application provides a computer program product, including code. When the code is executed, the computer program product is configured to implement the method according to any one of the first aspect or the possible implementations of the first aspect, and the method according to any one of the second aspect or the possible implementations of the second aspect.

According to a ninth aspect, this application provides a chip system. The chip system includes a processor, configured to support a computing apparatus in implementing functions in the foregoing aspects, for example, sending or processing data or information in the foregoing methods. In a possible design, the chip system further includes a memory. The memory is configured to store program instructions and data that are necessary for an execution device or a training device. The chip system may include a chip, or may include a chip and another discrete device.

## BRIEF DESCRIPTION OF DRAWINGS

FIG. 1 is a diagram of a structure of an artificial intelligence main framework;
FIG. 2 is a diagram of an autonomous driving apparatus according to an embodiment of this application;
FIG. 3 is a diagram of a system architecture according to an embodiment of this application;
FIG. 4 is a diagram of a system architecture according to an embodiment of this application;
FIG. 5 is a schematic flowchart of a model training method according to an embodiment of this application;
FIG. 6 is a diagram of a scenario of a lane change behavior of a vehicle according to an embodiment of this application;
FIG. 7 is a diagram of determining a reward value according to an embodiment of this application;
FIG. 8 is a diagram of pre-training according to an embodiment of this application;
FIG. 9 is a schematic flowchart of a model training method according to an embodiment of this application;
FIG. 10A is a diagram of a structure of a model training apparatus according to an embodiment of this application;
FIG. 10B is a diagram of a structure of a vehicle control apparatus according to an embodiment of this application;
FIG. 11 is a diagram of a terminal device according to an embodiment of this application;
FIG. 12 is a diagram of a server according to an embodiment of this application; and
FIG. 13 is a diagram of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

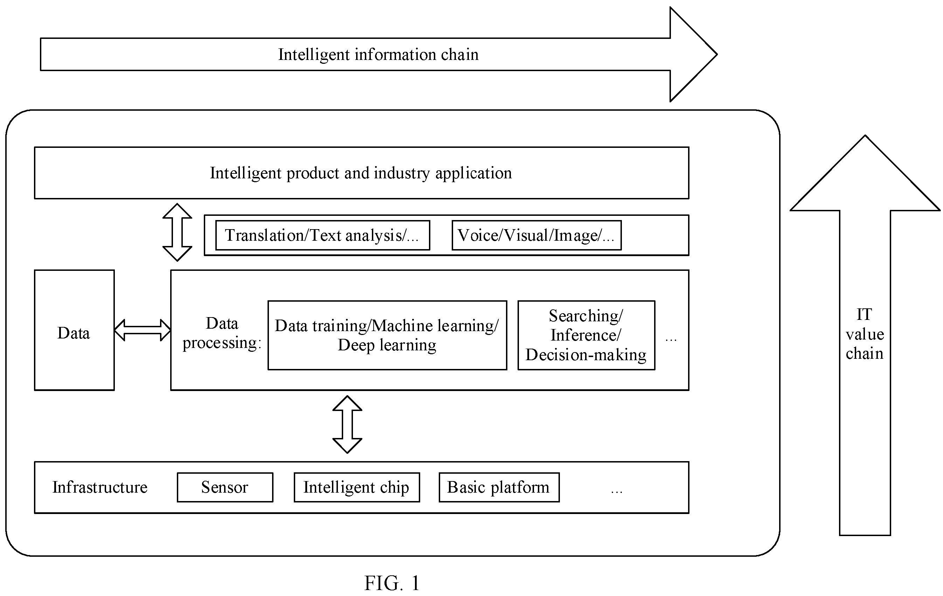

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects values brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnected network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

The inference is a process of performing machine thinking and problem resolving by using formal information according to an inference control policy and by simulating a human intelligent inference manner in a computer or an intelligent system. A typical function is searching and matching.

The decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent products and industry applications are products and applications of the artificial intelligence system in various fields, and are encapsulation for an overall artificial intelligence solution, so that decision-making for intelligent information is productized and the applications are implemented. Application fields thereof mainly include an intelligent terminal, intelligent transportation, intelligent healthcare, autonomous driving, a smart city, and the like.

This application may be applied to an autonomous driving module of a vehicle.

In a possible implementation, the vehicle may be an internal combustion engine vehicle that uses an engine as a power source, a hybrid power vehicle that uses an engine and an electric motor as a power source, an electric vehicle that uses an electric motor as a power source, or the like.

In this embodiment of this application, the vehicle may include a driving apparatus 100 with a driving function.

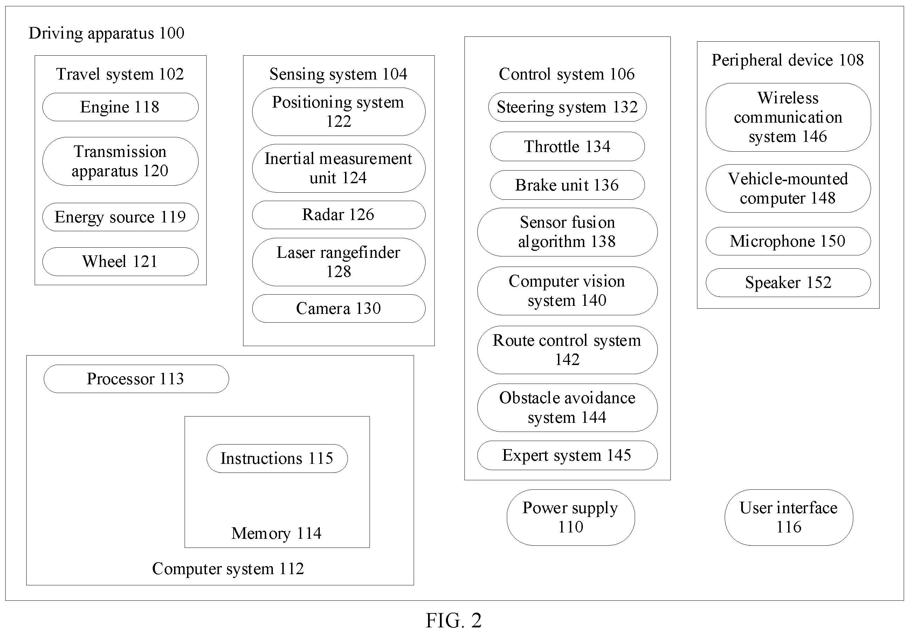

FIG. 2 is a functional block diagram of a driving apparatus 100 with an autonomous driving function according to an embodiment of this application. In an embodiment, the driving apparatus 100 is configured to be in a fully or partially autonomous driving mode. For example, the driving apparatus 100 may control itself while being in an autonomous driving mode, and may determine current states of the autonomous driving apparatus and a surrounding environment of the autonomous driving apparatus through a manual operation, determine a possible behavior of at least one another autonomous driving apparatus in the surrounding environment, determine a confidence level corresponding to a probability that the another autonomous driving apparatus performs the possible behavior, and control the driving apparatus 100 based on determined information. When the driving apparatus 100 is in the autonomous driving mode, the driving apparatus 100 may be set to operate without interacting with a person.

The driving apparatus 100 may include various subsystems, for example, a travel system 102, a sensor system 104, a control system 106, one or more peripheral devices 108, a power supply 110, a computer system 112, and a user interface 116. Optionally, the driving apparatus 100 may include more or fewer subsystems, and each subsystem may include a plurality of elements. In addition, each subsystem and element of the driving apparatus 100 may be interconnected in a wired or wireless manner.

The travel system 102 may include a component that powers the driving apparatus 100. In an embodiment, the travel system 102 may include an engine 118, an energy source 119, a transmission apparatus 120, and a wheel/tire 121. The engine 118 may be a combination of an internal combustion engine, an electric motor, an air compression engine, or another type of engine, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may further provide energy for another system of the driving apparatus 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more of the wheel 121.

The sensor system 104 may include several sensors that sense information about a surrounding environment of the driving apparatus 100. For example, the sensor system 104 may include a positioning system 122 (the positioning system may be a global positioning system (global positioning system, GPS) system, a BeiDou system, or another positioning system), an inertial measurement unit (inertial measurement unit, IMU) 124, a radar 126 (or referred to as a radar sensor), a laser rangefinder 128, and a camera 130. The sensor system 104 may further include a sensor (for example, an in-vehicle air quality monitor, a fuel gauge, or an oil temperature gauge) of an internal system of the monitored driving apparatus 100. Sensor data from one or more of these sensors may be used to detect an object and corresponding features (a location, a shape, a direction, a speed, and the like) of the object. Such detection and recognition are key functions for implementing a secure operation by the driving apparatus 100.

The positioning system 122 may be configured to estimate a geographical location of the driving apparatus 100. The IMU 124 is configured to sense a location and an orientation change of the driving apparatus 100 based on inertial acceleration. In an embodiment, the IMU 124 may be a combination of an accelerometer and a gyroscope.

The positioning system 122 may further include a receiver, and the receiver may receive a signal from a navigation satellite.

The radar 126 may sense an object in a surrounding environment of the driving apparatus 100 by using a radio signal. In some embodiments, in addition to sensing an object, the radar 126 may be further configured to sense a speed and/or a moving direction of the object.

The radar 126 may include an electromagnetic wave transmitting portion and receiving portion. The radar 126 may be implemented as a pulse radar (pulse radar) mode or a continuous wave radar (continuous wave radar) mode in a principle of radio wave transmission. The radar 126 in the continuous wave radar mode may be implemented as a frequency modulated continuous wave (frequency modulated continuous wave, FMCW) mode or a frequency shift keying (frequency shift keying, FSK) mode based on a signal waveform.

The radar 126 may use an electromagnetic wave as a medium, to detect an object based on a time of flight (time of flight, ToF) manner or a phase-shift (phase-shift) manner, and detect a location of the detected object, a distance from the detected object, and a relative speed of the detected object. To detect an object located before, behind, or beside a vehicle, the radar 126 may be configured at an appropriate position of an exterior of the vehicle. The lidar 126 may use a laser as a medium, to detect an object based on a ToF manner or a phase-shift manner, and detect a location of the detected object, a distance from the detected object, and a relative speed of the detected object.

Optionally, to detect an object located before, behind, or beside a vehicle, the lidar 126 may be configured at an appropriate position of an exterior of the vehicle.

The laser rangefinder 128 may use a laser to sense an object in an environment in which the driving apparatus 100 is located. In some embodiments, the laser rangefinder 128 may include one or more laser sources, a laser scanner, one or more detectors, and another system component.

The camera 130 can be configured to capture a plurality of images of the surrounding environment of the driving apparatus 100. The camera 130 may be a static camera or a video camera.

In this embodiment of this application, the sensing system 104 may collect road condition information of the vehicle.

The control system 106 controls operations of the driving apparatus 100 and a component of the driving apparatus 100. The control system 106 may include various elements, including a steering system 132, a throttle 134, a brake unit 136, a sensor fusion algorithm 138, a computer vision system 140, a route control system 142, and an obstacle avoidance system 144.

The steering system 132 may be operated to adjust a moving direction of the driving apparatus 100. For example, in an embodiment, the steering system 132 may be a steering wheel system.

The throttle 134 is configured to control an operating speed of the engine 118 and further control a speed of the driving apparatus 100.

The brake unit 136 is configured to control the driving apparatus 100 to decelerate. The brake unit 136 may use friction to slow down the wheel 121. In another embodiment, the brake unit 136 may convert kinetic energy of the wheel 121 into a current. The brake unit 136 may alternatively use another form to reduce a rotational speed of the wheel 121, so as to control the speed of the driving apparatus 100.

The computer vision system 140 may operate to process and analyze an image captured by the camera 130, to identify an object and/or a feature in the surrounding environment of the driving apparatus 100. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to: draw a map for an environment, track an object, estimate a speed of the object, and the like.

The route control system 142 is configured to determine a driving route of the driving apparatus 100. In some embodiments, the route control system 142 may determine the driving route for the driving apparatus 100 with reference to data from the sensor 138, the positioning system 122, and one or more predetermined maps.

The obstacle avoidance system 144 is configured to identify, evaluate, and avoid or otherwise bypass a potential obstacle in the environment of the driving apparatus 100.

In this embodiment of this application, the computer vision system 140, the route control system 142, and the obstacle avoidance system 144 may be implemented by using a neural network (for example, a first neural network model). The first neural network model may determine, based on the road condition information collected by the sensing system 104, a driving intention, route planning, or an interaction policy (for example, an obstacle avoidance policy) between the vehicle and an environment.

An expert system 145 may be a rule-based algorithm. The expert system 145 may determine a control signal for the vehicle based on the road condition information and the driving intention, the route planning, or the interaction policy between the vehicle and the environment that is output by the neural network, to control the vehicle (for example, the steering system 132, the throttle 134, or the brake unit 136 of the vehicle) to safely and comfortably travel in a traffic environment.

Certainly, in an instance, the control system 106 may additionally or alternatively include a component other than those shown and described. Alternatively, the control system 106 may remove some of the components shown above.

The driving apparatus 100 interacts with an external sensor, another autonomous driving apparatus, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the driving apparatus 100 to interact with the user interface 116. For example, the vehicle-mounted computer 148 may provide information for the user of the driving apparatus 100. The user interface 116 may further operate the vehicle-mounted computer 148 to receive an input of the user. The vehicle-mounted computer 148 may perform an operation through a touchscreen. In other cases, the peripheral device 108 may provide a means for the driving apparatus 100 to communicate with another device located in the vehicle. For example, the microphone 150 may receive audio (for example, a voice command or another audio input) from the user of the driving apparatus 100. Similarly, the speaker 152 may output audio to the user of the driving apparatus 100.

The wireless communication system 146 may wirelessly communicate with one or more devices directly or through a communication network. For example, the wireless communication system 146 may use 3G cellular communication such as code division multiple access (code division multiple access, CDMA), EVD0, or global system for mobile communications (global system for mobile communications, GSM)/general packet radio service (general packet radio service, GPRS), or 4G cellular communication such as long term evolution (long term evolution, LTE), or 5G cellular communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. Other wireless protocols, for example, various autonomous driving apparatus communication systems such as the wireless communication system 146, may include one or more dedicated short range communication (dedicated short range communication, DSRC) devices. These devices may include public and/or private data communication between autonomous driving apparatuses and/or roadside stations.

The power supply 110 may supply power to various components of the driving apparatus 100. In an embodiment, the power supply 110 may be a rechargeable lithium-ion or lead-acid battery. One or more battery packs of such a battery may be configured as a power supply to supply power to the various components of the driving apparatus 100. In some embodiments, the power supply 110 and the energy source 119 may be implemented together, for example, in some pure electric vehicles.

Some or all functions of the driving apparatus 100 are controlled by the computer system 112. The computer system 112 may include at least one processor 113. The processor 113 executes instructions 115 stored in a non-transient computer-readable medium such as a memory 114. The computer system 112 may alternatively be a plurality of computing devices that control an individual component or a subsystem of the driving apparatus 100 in a distributed manner.

The processor 113 may be any conventional processor, such as a commercially available central processing unit (central processing unit, CPU). Optionally, the processor may be a dedicated device, for example, an application-specific integrated circuit (application-specific integrated circuit, ASIC) or another hardware-based processor. Although FIG. 2 functionally illustrates the processor, the memory, and other elements of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the autonomous driving apparatus and perform wireless communication with the autonomous driving apparatus. In another aspect, some processes described herein are performed on a processor disposed inside the autonomous driving apparatus, while others are performed by a remote processor, including performing steps necessary for single manipulation.

In some embodiments, the memory 114 may include the instructions 115 (for example, program logic). The instructions 115 may be executed by the processor 113 to perform various functions of the driving apparatus 100, including those functions described above. The memory 114 may further include additional instructions, including instructions for sending data to, receiving data from, interacting with, and/or controlling one or more of the travel system 102, the sensor system 104, the control system 106, and the peripheral device 108.

In this embodiment of this application, the processor 113 may execute the instructions 115 in the memory 114 to implement functions of the computer vision system 140, the route control system 142, the obstacle avoidance system 144, and the expert system 145 that are described above.

In addition to the instructions 115, the memory 114 may further store data such as a road map, route information, a location, a direction, and a speed of the autonomous driving apparatus, and other data of the autonomous driving apparatus, and other information. Such information may be used by the driving apparatus 100 and the computer system 112 when the driving apparatus 100 operates in an autonomous mode, a semi-autonomous mode, and/or a manual mode.

The user interface 116 is configured to provide information for or receive information from the user of the driving apparatus 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control the functions of the driving apparatus 100 based on inputs received from various subsystems (for example, the travel system 102, the sensor system 104, and the control system 106) and from the user interface 116. For example, the computer system 112 may use the input from the control system 106 to control the steering unit 132 to avoid an obstacle detected by the sensor system 104 and the obstacle avoidance system 144. In some embodiments, the computer system 112 may be operated to provide control over the driving apparatus 100 and the subsystem of the driving apparatus 100 in many aspects.

Optionally, one or more of the foregoing components may be installed separately from or associated with the driving apparatus 100. For example, the memory 114 may be partially or completely separated from the driving apparatus 100. The foregoing components may be communicatively coupled together in a wired and/or wireless manner.

Optionally, the foregoing components are merely examples. During actual application, components in the foregoing modules may be added or deleted according to an actual requirement. FIG. 2 should not be understood as a limitation on embodiments of this application.

An autonomous driving vehicle traveling on a road, such as the foregoing driving apparatus 100, may identify an object in a surrounding environment of the driving apparatus 100 to determine adjustment to a current speed. The object may be another autonomous driving apparatus, a traffic control device, or another type of object. In some examples, each identified object may be considered independently, and a speed to be adjusted to by the autonomous driving vehicle may be determined based on features of the object, such as a current speed of the object, an acceleration of the object, and a distance between the object and the autonomous driving apparatus.

Optionally, the driving apparatus 100 or computing devices (for example, the computer system 112, the computer vision system 140, and the memory 114 in FIG. 2) associated with the driving apparatus 100 may predict a behavior of an identified object based on features of the identified object and a state of the surrounding environment (for example, traffic, rain, or ice on a road). Optionally, all identified objects depend on behavior of each other, and therefore all the identified objects may be considered together to predict behavior of a single identified object. The driving apparatus 100 can adjust the speed of the driving apparatus 100 based on the predicted behavior of the identified object. In other words, the autonomous driving vehicle can determine, based on the predicted behavior of the object, a stable state (for example, acceleration, deceleration, or stop) to which the autonomous driving apparatus needs to be adjusted. In this process, another factor may also be considered to determine the speed of the driving apparatus 100, for example, a horizontal position of the driving apparatus 100 on a road on which the driving apparatus 100 travels, a curvature of the road, and proximity between a static object and a dynamic object.

In addition to providing an instruction for adjusting the speed of the autonomous driving vehicle, the computing device may further provide an instruction for modifying a steering angle of the driving apparatus 100, so that the autonomous driving vehicle can follow a given trajectory and/or maintain safe horizontal and vertical distances from an object (for example, a vehicle on a neighboring lane on the road) near the autonomous driving vehicle.

The driving apparatus 100 may be a car, a truck, a motorcycle, a bus, a boat, an airplane, a helicopter, a lawn mower, a recreational vehicle, a playground autonomous driving apparatus, a construction device, a trolley, a golf cart, a train, a handcart, or the like. This is not specifically limited in this embodiment of this application.

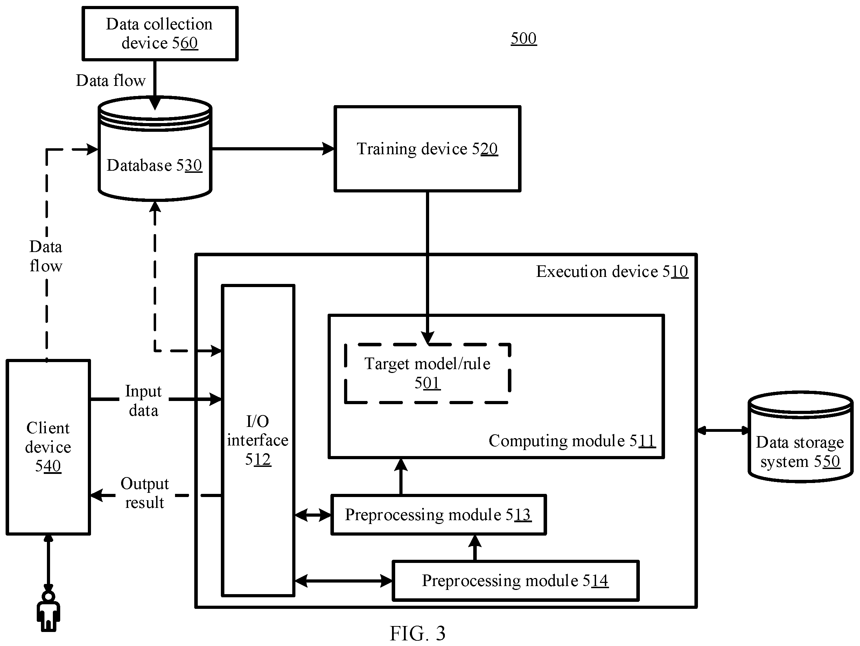

It should be understood that steps related to model training and an inference process in the method provided in this embodiment of this application relate to AI-related operations. The following describes in detail a system architecture provided in an embodiment of this application with reference to FIG. 3.

FIG. 3 is a diagram of a system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The execution device 510 may be a wheeled mobile device.

The data collection device 560 is configured to collect a training sample. The training sample may be real driving data of a vehicle (for example, including road condition information of the vehicle at a plurality of moments and corresponding driving information), or the training sample may be simulated driving data of a vehicle in a simulator, or the like. After collecting the training sample, the data collection device 560 stores the training sample into the database 530.

The training device 520 may train a to-be-trained neural network (for example, neural network models (for example, including a first neural network model and a second neural network model) in this embodiment of this application) based on the training sample maintained in the database 530, to obtain the target model/rule 501.

It should be understood that the training device 520 may perform a pre-training process on the to-be-trained neural network based on the training sample maintained in the database 530, or perform fine-tuning on a model based on pre-training.

It should be noted that during actual application, the training sample maintained in the database 530 is not necessarily collected by the data collection device 560, and may be received from another device. In addition, it should be noted that the training device 520 does not necessarily train the target model/rule 501 completely based on the training sample maintained in the database 530, and may perform model training by obtaining a training sample from a cloud or another place. The foregoing descriptions should not be construed as a limitation on this embodiment of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may input data to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, and the like in the data storage system 550 for corresponding processing, and may store data, instructions, and the like obtained through corresponding processing into the data storage system 550.

Finally, the I/O interface 512 provides a processing result for the client device 540, to provide the processing result for the user.

In the case shown in FIG. 3, the user may manually provide the input data, and "manually providing the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection end, collect the input data input into the I/O interface 512 and an output result output from the I/O interface 512 that are shown in the figure, use the input data and the output result as new sample data, and store the new sample data into the database 530. Certainly, the client device 540 may alternatively not perform collection. Instead, the I/O interface 512 directly stores, into the database 530 as new sample data, the input data input into the I/O interface 512 and the output result output from the I/O interface 512 that are shown in the figure.

It should be noted that FIG. 3 is merely a diagram of a system architecture according to an embodiment of this application. A location relationship between devices, components, modules, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:

In embodiments of this application, the computing module 511 in the execution device 510 may obtain the code stored in the data storage system 550, to implement steps related to a model inference process in embodiments of this application.

In embodiments of this application, the computing module 511 of the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

Specifically, the computing module 511 in the execution device 510 may be the hardware system that has the instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be the combination of the hardware system that does not have the instruction execution function and the hardware system that has the instruction execution function. Some of the steps related to the model inference process provided in embodiments of this application may alternatively be implemented by the hardware system that does not have the instruction execution function in the computing module 511 in the execution device 510. This is not limited herein.

Details from a perspective of model training are as follows:

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that the training device 520 may be the combination of the hardware system that does not have the instruction execution function and the hardware system that has the instruction execution function. Some of the steps related to model training provided in embodiments of this application may alternatively be implemented by the hardware system that does not have the instruction execution function in the training device 520. This is not limited herein.

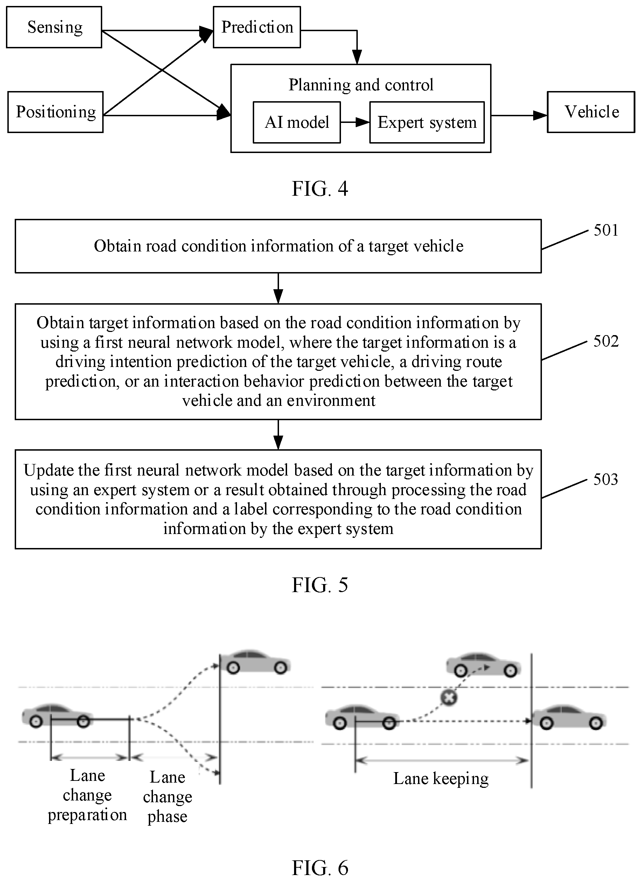

The first neural network model and the expert system described above may be briefly referred to as a planning and control module in a vehicle. Refer to FIG. 4. An AI model in FIG. 4 may be the first neural network model, and a vehicle in FIG. 4 may be specifically a travel system in the vehicle.

Embodiments of this application are mainly applied to a planning and control system in autonomous driving. The planning and control system plays an important role in an autonomous driving system. In an autonomous driving basic framework shown in FIG. 4, the planning and control system receives all information of sensing, positioning, and prediction modules, plans a proper trajectory according to a current task planning, and converts the trajectory into a vehicle control quantity, to control the vehicle to travel safely and comfortably in a traffic environment. The AI model of the planning and control system and expert system coexist. Due to problems such as non-interpretability of the AI model and a difficulty in determining a functional boundary, the AI model of the planning and control system needs to be guaranteed by the expert system.

Embodiments of this application relate to massive application of a neural network. Therefore, for ease of understanding, the following first describes related terms and related concepts such as the neural network in embodiments of this application.

(1) Neural network

The neural network may include neurons. The neuron may be an operation unit that uses xs (namely, input data) and an intercept of 1 as an input. An output of the operation unit may be as follows:

$$h_{W,b}\left(x\right) = f\left(W^{T}x\right) = f(\sum\nolimits_{s=1}^{n} W_{s}x_{s} + b)$$

Herein, s=1, 2, ..., and n, n is a natural number greater than 1, Ws is a weight of xs, and b is a bias of the neuron. f is an activation function (activation function) of the neuron, and is used to introduce a non-linear feature into the neural network, to convert an input signal in the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network including many hidden layers. The "many" herein does not have a special measurement standard. The DNN is divided based on positions of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors $\vec{b}$. Definitions of these parameters in the DNN are as follows: The coefficient W is used as an example. It is assumed that in a DNN having three layers, a linear coefficient from a fourth neuron at a second layer to a second neuron at a third layer is defined as $w_{24}^{3}$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter W. In the deep neural network, more hidden layers allow the network to better describe a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix including vectors W at many layers).

(3) Loss function

In a process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before a first update, that is, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes increasingly small. Specifically, an input signal is propagated forward until an error loss occurs in an output, and the parameter in the initial model is updated based on back propagation error loss information, so that the error loss converges. The back propagation algorithm is an error-loss-centered back propagation motion intended to obtain an optimal model parameter, such as a weight matrix.

Key technologies in the autonomous driving field include perception, decision-making, planning, and control. An autonomous decision-making capability of a vehicle plays a key role in intelligence and safety of an entire autonomous driving system. Compared with an expert system, a data-driven AI method has a human-like decision-making capability in a complex scenario, and is a development trend of an autonomous driving technology. However, the data-driven AI method is not interpretable and needs to be used together with a planning and control expert system at present and for a considerable period of time in the future. Therefore, compared with an AI application in the perception field, AI in the planning and control field is required not only to learn human-like decision-making from massive human driving data, but also to ensure compatibility with the planning and control expert system.

Specifically, in the planning and control system, an AI model may predict a driving intention, route planning, or an interaction policy between the vehicle and an environment based on road condition information. However, a result output by the AI model may be poor from a perspective of driving safety or comfort. Therefore, a rule-based algorithm needs to be used to determine the result output by the AI model, determine whether the result output by the AI model can be used, and determine control information of the vehicle when it is determined that the result output by the AI model can be used.

Currently, mainstream data-driven methods are mostly open-loop learning methods (for example, imitation learning). Ideas of such methods are relatively direct: learning an end-to-end mapping model from observations to posterior trajectory outputs based on massive human driving data. However, it is difficult to consider actual closed-loop effect of an output action in such a method learning model, causing a decrease in actual application effect.

With reference to the foregoing descriptions, embodiments of this application provide a model training method and a road topology prediction method, which are respectively applied to a training phase and an inference phase of a model. The following separately provides description.

1. Training phase

In embodiments of this application, the training phase is a process in which the training device 520 performs a training operation on the target model 501 by using a training sample in a training set in FIG. 3. For details, refer to FIG. 5. FIG. 5 is a schematic flowchart of a model training method according to an embodiment of this application. The method may specifically include the following steps.

501: Obtain road condition information of a target vehicle.

In a possible implementation, when an AI model (for example, the first neural network model in embodiments of this application) in a planning and control system of the vehicle is trained, a training sample may be obtained. The training sample may include road condition information of the target vehicle at a plurality of moments and corresponding driving information. For example, the driving information may be a driving intention (for example, turning left, turning right, or lane keeping), a driving trajectory, or an interaction decision (for example, whether to avoid an obstacle) between the vehicle and an environment.

Because the driving information is usually inaccurate (for example, the driving information is not optimal information in terms of safety or comfort), an expert module is required to provide guarantee and correction for the driving information. In an existing implementation, during training of an AI model, the driving information is usually used as a label to update the AI model, and an output of an expert system is not introduced subsequently. Therefore, the label used to update the first neural network model has low confidence in essence, causing low processing accuracy of a trained model.

In embodiments of this application, an output of an expert system is used in training of the first neural network model. This is equivalent to performing closed-loop training on the first neural network model, thereby improving accuracy of the AI model.

The following first describes the training sample in embodiments of this application.

In a possible implementation, the training sample may include road condition information of the target vehicle at a specific moment.

The target vehicle may be a physical vehicle, and the road condition information may come from road condition information in driving data of the real vehicle.

For example, the road condition information may be data collected by a sensor (for example, a camera or a radar) from a surrounding environment such as a road on which the target vehicle is located.

In addition, the target vehicle may alternatively be a virtual vehicle in a simulator, and the road condition information may come from road condition information in simulated driving data of the vehicle in the simulator.

The road condition information may include status information of a surrounding traffic participant, including a location, a pose, a speed, an acceleration, and the like; and road-related information, including a lane speed limit, a remaining lane length, solid and broken lines, a traffic signal, and the like.

In addition, a status of the target vehicle may be further obtained. The status may be input into the first neural network model together with the road condition information. The status of the target vehicle may be a vehicle location, a speed (for example, a longitudinal speed and a lateral speed in vehicle coordinates), a posture (for example, roll, pitch, and yaw of the vehicle), an acceleration, and the like of the target vehicle.

502: Obtain target information based on the road condition information by using a first neural network model, where the target information is a driving intention prediction of the target vehicle, a driving route prediction, or an interaction behavior prediction between the target vehicle and the environment.

For example, the target information may be a driving intention (for example, turning left, turning right, or lane keeping), a driving trajectory, or an interaction decision (for example, whether to avoid an obstacle) between the target vehicle and the environment.

503: Update the first neural network model based on the target information by using the expert system or a result obtained through processing the road condition information and a label corresponding to the road condition information by the expert system.

In a possible implementation, the road condition information and the label corresponding to the target information may be input into the expert system, to obtain a processing result of the expert system.

The label corresponding to the road condition information may be data (for example, the data may be the driving intention prediction, the driving route prediction, or the interaction behavior prediction between the target vehicle and the environment) in an actual driving process (which may be a driving process in a simulated environment, or may be a driving process in an actual physical environment). The data may be used as a true value corresponding to the target information in the training sample.

The expert system may be implemented based on a rule, or may be implemented based on a neural network.

In a possible implementation, feasibility of the label corresponding to the road condition information may be determined based on the processing result, that is, whether safety or comfort of the vehicle meets a requirement when the target vehicle performs corresponding driving control based on the label. For example, the feasibility may be represented by 1 or 0, where 1 indicates feasible and 0 indicates infeasible. For example, refer to FIG. 6. If the label indicates lane change to the left, and the expert system determines that there is a safety risk after the vehicle changes a lane to the left, the expert system may output infeasibility of the lane change to the left and control the vehicle to perform lane keeping.

In a possible implementation, the processing result may be a feasibility score of the label, that is, a satisfaction degree of safety or comfort of the vehicle when the target vehicle performs driving control corresponding to the label.

The expert system may be a policy-type algorithm (a non-neural network algorithm).

When processing the label, the expert system may first determine a planning and control system status s based on the road condition information. The planning and control system status s may be assigned values of some parameters in the expert system. Then, the expert system may obtain a next-moment status s' of the planning and control system based on the road condition information and the label (for example, the label and the road condition information are used as inputs of the expert system, or data obtained by mapping the label and the road condition information is used as an input of the expert system). Further, the expert system obtains the feasibility of the label based on information such as the planning and control system status s and the next-moment status s'.

It should be understood that the feasibility may be data directly output by the expert system, or the feasibility of the label may be determined based on an output result of the expert system. For example, the expert system may output a corrected label, and the feasibility may be determined based on a difference between the label before the correction and the corrected label. For example, if the corrected label is not different from the label before correction, it is considered that the label is feasible. If the corrected label is different from the label before correction, it is considered that the label is infeasible.

The feasibility obtained by the expert system may be considered as an evaluation on the label. Therefore, the feasibility may be introduced into a training process of the AI model. Specifically, a loss may be determined based on the target information and the corresponding label (because the label may be inaccurate, the loss may also be inaccurate, and if the AI model is updated based on the inaccurate loss, training accuracy of the model is poor). Therefore, in embodiments of this application, the loss is adjusted based on the feasibility, and an update gradient is determined based on an adjusted loss (adjustment of the loss is equivalent to introducing the output of the expert system).

For example, the feasibility indicates whether the label is feasible or not. When the feasibility indicates that the label is feasible, it may be determined that the first neural network model needs to be updated. When the feasibility indicates that the label is infeasible, it may be determined that the first neural network model does not need to be updated, or an absolute value of the update gradient is correspondingly reduced.

For example, the feasibility may indicate a feasibility score of the label, and the feasibility score may be used as a weight to adjust the loss. When the feasibility score is large, it may be considered that accuracy of the label is high, and the update gradient obtained based on the feasibility score is also large. When the feasibility score is small, it may be considered that accuracy of the label is low, and the update gradient obtained based on the feasibility score is also small.

Specifically, a massive human driving dataset D=[x, y] (x is a network input quantity, and y is a label quantity) is set, and D is constructed into a discrete point dataset or a time stream dataset as required. D is input into the planning and control system (for example, a rule-based expert system). To be specific, the planning and control system status s is set based on x, and the label quantity y and x are used as inputs of the planning and control system, to obtain the next-moment status s' of the planning and control system and an output a of the planning and control system, and obtain a data tuple [x, y, s, a, s'] including a planning and control feature. In addition, an evaluation model R is designed to evaluate a planning and control response, and a score r=R(s, a (based on x and y), s'). The foregoing operations are performed on the dataset D to obtain a score dataset Ds=[x, y, r] including the planning and control feature. During training based on the score dataset, the score r is used as a weight of a corresponding sample, affecting the update gradient of the model.

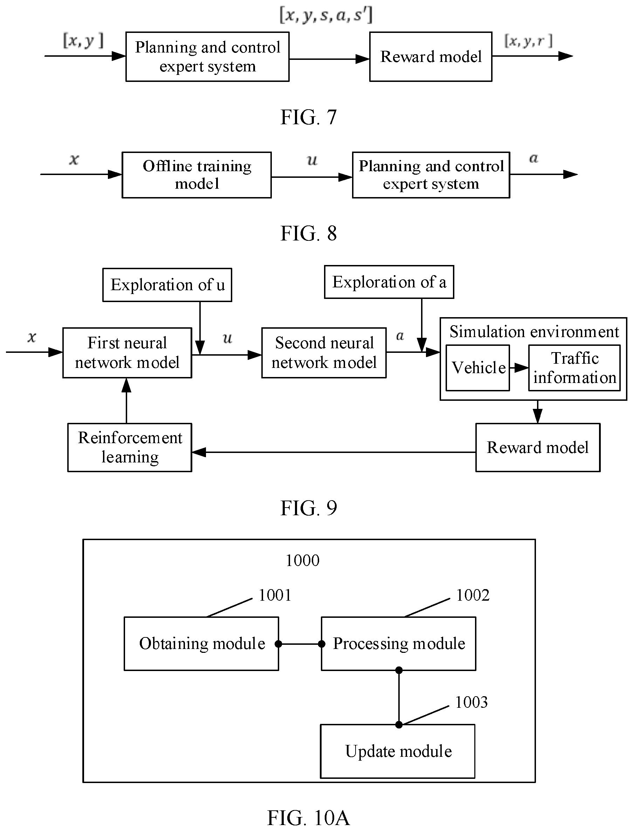

Refer to FIG. 7. An example in which the target information is a lane change decision is used. For the collected lane change dataset D=[x, y], x is road condition information, and y is lane change information (that is, the label in embodiments of this application), namely, lane change to the left, lane keeping, and lane change to the right. D is injected into the expert system frame by frame, x is used to perform status initialization on the expert system to obtain s, and y is input into the expert system as a heuristic command. In this case, the expert system generates a corresponding output a for each frame of data, and updates s to the subsequent status s'. In this way, the data tuple [x, y, s, a, s'] is obtained. Then, a reward model (a first reward model) is designed to score the tuple. The reward model may be used in offline learning, and is specifically used to determine the feasibility of the label based on the output of the expert system. For example, in embodiments, the reward model may score the tuple based on whether y is the same as a. If y is the same as a, it is proved that the planning and control expert system can respond to the input of y, and 1 point is obtained (that is, it indicates that the target information is feasible). If y is different from a, it is proved that the planning and control expert system cannot respond to the input of y, and 0 point is obtained (that is, it indicates that the target information is infeasible). In this way, augmented data 1 [x, y, r] is obtained.

The first neural network model is trained based on the augmented dataset 1. Compared with a conventional dataset in which values include [input quantity, label quantity], the augmented dataset 1 further includes a scoring item. In the training process, the scoring item is used as a weight of the sample in a model parameter update process. In this embodiment, if the sample does not adapt to planning and control, r=0, and the sample has no impact on an actual parameter update. If the sample adapts to the planning and control, r=1, and the sample affects the model parameter update.

In addition, in a possible implementation, the expert system may be a parameterized neural network model (that is, a neural network, which may be referred to as a second neural network model in embodiments of this application). Through training, the parameterized neural network model may have a data processing capability that is the same as or similar to that of the expert system before parameterization.

Refer to FIG. 8. In this embodiment, an offline training model m (that is, the first neural network model) may be used. Under an input x, the expert system takes over an output u of the offline training model m, and obtains a corresponding output a of the expert system, thereby obtaining an augmented dataset 2 [x, u, a]. The augmented dataset 2 includes an expert system feature in the offline training model m. A parameterized model f (that is, the second neural network model) of the expert system may be obtained based on the augmented dataset 2 in which (x, u) is used as an input and a is used as a label for training. In this case, generalization performance of the parameterized model f in the offline training model m is good.

For example, it is assumed that road condition information obtained in an interaction process between the first neural network model and the planning and control system is x, and the output of the first neural network model is u when x is given. The output a of the expert system may be obtained when both x and u are input into the expert system. After sufficient rounds of interaction, a planning and control feature dataset Dp=[x, u, a] may be obtained. Based on the dataset Dp, a neural network model a=f(x, u; w) of a rule-based expert system may be obtained through training. f is a parameterized model of the expert system (that is, the second neural network model in this embodiment of this application), and w is a model parameter.

When the expert system is a non-neural network, an update gradient of the first neural network model cannot be directly determined based on a reward value corresponding to the output of the expert system (the expert system is a non-neural network and cannot perform gradient backpropagation, and an expert system based on a policy algorithm usually has a large quantity of modules such as state machine transition, random sampling, and optimization, and therefore, if feature learning is performed on the expert system through random exploration is very slow, this greatly increases difficulties of online learning and interaction). However, if the expert system is parameterized in the training process, an output of the expert system may be used to determine a reward value. During gradient backpropagation, a gradient may be propagated to the first neural network model. In this way, an update gradient corresponding to the first neural network model may be obtained, and the update gradient is obtained based on the output of the expert system that is implemented based on a neural network model. This is equivalent to introducing, into the training process of the first neural network model, the output of the expert system that is implemented based on a neural network model, thereby improving processing accuracy of the trained model.

In a possible implementation, the expert system is a second neural network model. A control instruction of the target vehicle may be determined based on the road condition information and the target information by using the second neural network model. The target vehicle is controlled, according to the control instruction, to interact with the environment around the target vehicle, to obtain an interaction result. The first neural network model is updated based on the interaction result. For example, a reward model (a second reward model) may be designed, a reward value is determined based on the interaction result, an update gradient of the first neural network is determined based on the reward value, and the first neural network model is updated based on the update gradient of the first neural network model.

Optionally, the second neural network model may be further updated according to the control instruction and based on a label corresponding to the control instruction. The label corresponding to the control instruction is obtained through processing the road condition information and the target information by a rule-based expert system.

A manner in which the reward model determines the reward value based on the interaction result may be implemented by existing reinforcement learning, and details are not described herein.

For example, refer to FIG. 9. A planning and control system includes an offline training model m (the first neural network model) and a parameterized model f (the second neural network model) of the planning and control expert system. In this embodiment, the two models are further optimized through online interaction. Specifically, m and f are brought into a simulation system. In this case, due to existence of f, a may be directly explored, and the exploration is more efficient. A reward model (the second reward model) is brought into the online exploration, and interaction data [x, (u, a), x', r, d] may be obtained. u and a are an output of the first neural network model and an output of the second neural network model in a given road condition information x. f may be continuously updated based on data [u, a]. Herein, a is exploration data, and m may be updated by conventional reinforcement learning based on [x, a, x', r, d], x' is road condition information obtained through interaction between the target vehicle and the surrounding environment, r is a score (for example, a reward value) obtained by the reward model based on an interaction result obtained through interaction between the target vehicle and the surrounding environment, and d is a mark indicating whether task execution ends, for example, task execution is completed or execution is suspended. In this way, continuous online optimization of m and f is implemented until convergence.

It should be noted that in some implementations of this application, there may be a plurality of manners of determining a training degree to which the first neural network model should be trained based on the update gradient. The following provides some termination conditions for ending training of the first neural network model, including but not limited to:

(1) A loss function reaches a preset threshold.

After the loss function is configured, a threshold (for example, 0.03) may be set for the loss function in advance. During iterative training of the first neural network model, whether a value of a loss function obtained through a current round of training reaches the threshold is determined after each round of training is completed. If the preset threshold is not reached, the training continues. If the preset threshold is reached, the training is terminated. In this case, a value of a network parameter of the first neural network model determined in the current round of training is used as a value of a network parameter of a finally trained first neural network model.

(2) A loss function begins to converge.

After the loss function is configured, iterative training may be performed on the first neural network model. If a difference between a value of a loss function obtained through a current round of training and a value of a loss function obtained through a previous round of training is within a preset range (for example, 0.01), it is considered that the loss function converges, and the training may be terminated. In this case, a value of a network parameter of the first neural network model determined in the current round of training is used as a value of a network parameter of a finally trained first neural network model.

(3) Training reaches a preset quantity of times.

In this manner, a quantity (for example, 1000) of times of iterative training on the first neural network model may be preconfigured. After the target loss function is configured, iterative training may be performed on the first neural network model. After each round of training is completed, a value of a network parameter of a first neural network model corresponding to the current round is stored until a quantity of times of iterative training reaches the preset quantity of times. Then, a first neural network model obtained through each round of training is verified based on test data, and a value of a network parameter with best performance is selected as a value of a final network parameter of the first neural network model.

2. Inference phase

In embodiments of this application, the inference phase is a process in which the execution device 510 performs vehicle control by using a trained target model 501 in FIG. 3. Specifically, during actual inference, the execution device 510 may obtain road condition information of the target vehicle, obtain target information by using the updated first neural network model obtained in the embodiment corresponding to FIG. 5, where the target information is a driving intention prediction of the target vehicle, a driving route prediction, or an interaction behavior prediction between the target vehicle and an environment, and then determine a control instruction of the target vehicle based on the road condition information and the target information by using an expert system.

The following describes, from a perspective of an apparatus, a model training apparatus provided in an embodiment of this application. The model training apparatus may be the foregoing training device 520. FIG. 10A is a diagram of a structure of a model training apparatus according to an embodiment of this application. As shown in FIG. 10A, the model training apparatus 1000 provided in this embodiment of this application includes the following modules.

An obtaining module 1001 is configured to obtain road condition information of a target vehicle.

For specific descriptions of the obtaining module 1001, refer to the descriptions of step 501 in the foregoing embodiment. Details are not described herein again.

A processing module 1002 is configured to obtain target information based on the road condition information by using a first neural network model. The target information is a driving intention prediction of the target vehicle, a driving route prediction, or an interaction behavior prediction between the target vehicle and an environment.

For specific descriptions of the processing module 1002, refer to the descriptions of step 502 in the foregoing embodiment. Details are not described herein again.

An update module 1003 is configured to update the first neural network model based on the target information by using an expert system or a result obtained through processing the road condition information and a label corresponding to the road condition information by the expert system.

For specific descriptions of the update module 1003, refer to the descriptions of step 503 in the foregoing embodiment. Details are not described herein again.

In a possible implementation, the update module 1003 is specifically configured to:
determine a loss based on the target information and the label corresponding to the road condition information; adjust the loss based on feasibility, to obtain an adjusted loss, where the feasibility is obtained based on the result obtained through processing the road condition information and the label corresponding to the road condition information by the expert system; and update the first neural network model based on the adjusted loss.

In a possible implementation, the feasibility indicates whether the label is feasible or not.

In a possible implementation, the feasibility is a feasibility score, and the update module 1003 is specifically configured to:
adjust the loss by using the feasibility score as a weight.

In a possible implementation, the feasibility is related to the following information:
safety or comfort of the target vehicle present when driving control is performed on the target vehicle based on the label.

The expert system is a second neural network model, and the update module 1003 is specifically configured to:
determine a control instruction of the target vehicle based on the road condition information and the target information by using the second neural network model; control, according to the control instruction, the target vehicle to interact with an environment around the target vehicle, to determine an interaction result; and update the first neural network model based on the interaction result.

In a possible implementation, the update module 1003 is further configured to update the second neural network model according to the control instruction and based on a label corresponding to the control instruction. The label corresponding to the control instruction is obtained through processing the road condition information and the target information by a rule-based expert system.

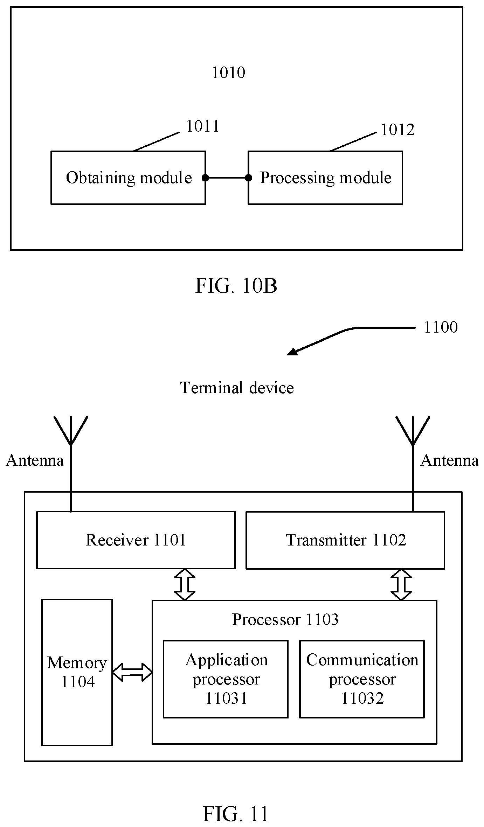

The following describes, from a perspective of an apparatus, a vehicle control apparatus provided in an embodiment of this application. The vehicle control apparatus may be the foregoing execution device 510. FIG. 10B is a diagram of a structure of a vehicle control apparatus according to an embodiment of this application. As shown in FIG. 10B, the vehicle control apparatus 1010 provided in this embodiment of this application includes the following modules.

An obtaining module 1011 is configured to obtain road condition information of a target vehicle.

A processing module 1012 is configured to: obtain target information based on the road condition information by using an updated first neural network model obtained in the embodiment corresponding to FIG. 5, where the target information is a driving intention prediction of the target vehicle, a driving route prediction, or an interaction behavior prediction between the target vehicle and an environment; and

determine a control instruction of the target vehicle based on the road condition information and the target information by using an expert system.

The following describes a terminal device 1100 according to an embodiment of this application. FIG. 11 is a diagram of a structure of a terminal device according to an embodiment of this application. The terminal device 1100 may be specifically represented as a mobile phone, a tablet, a notebook computer, an intelligent wearable device, an intelligent vehicle, an in-vehicle computing platform, an in-vehicle domain controller, an in-vehicle terminal, or the like. This is not limited herein. The terminal device 1100 implements a function of an execution device 510. Specifically, the terminal device 1100 includes a receiver 1101, a transmitter 1102, a processor 1103, and a memory 1104 (there may be one or more processors 1103 in the terminal device 1100). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extended set thereof. The operation instructions may include various operation instructions for implementing various operations.

The processor 1103 controls an operation of the terminal device. During specific application, components of the terminal device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application may be applied to the processor 1103 or may be implemented by the processor 1103. The processor 1103 may be an integrated circuit chip and has a signal processing capability. In an implementation process, steps in the foregoing method may be implemented by using a hardware integrated logic circuit in the processor 1103, or by using instructions in a form of software. The processor 1103 may be a general-purpose processor, a digital signal processor (digital signal processor, DSP), a microprocessor or microcontroller, a vision processing unit (vision processing unit, VPU), a tensor processing unit (tensor processing unit, TPU), or another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1104. The processor 1103 reads information in the memory 1104, and completes steps 501 to 503 in the foregoing embodiment in combination with hardware of the processor 1103.

The receiver 1101 may be configured to: receive input digital or character information, and generate a signal input related to a related setting and function control of the terminal device. The transmitter 1102 may be configured to output digit or character information through a first interface. The transmitter 1102 may be further configured to send instructions to a disk group through the first interface, to modify data in the disk group. The transmitter 1102 may further include a display device, for example, a display.

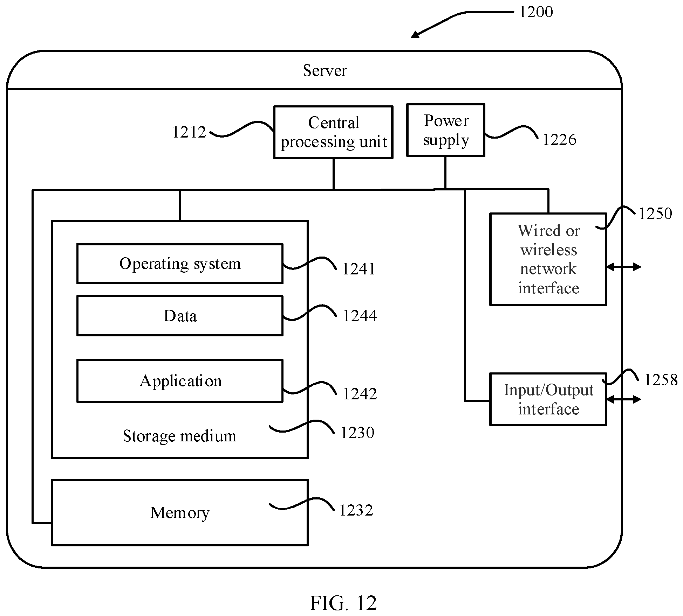

An embodiment of this application further provides a server. The server may be the foregoing training device 520. FIG. 12 is a diagram of a structure of a server according to an embodiment of this application. Specifically, the server 1200 is implemented by one or more servers, and the server 1200 may vary greatly due to different configurations or performance, and may include one or more central processing units (central processing units, CPUs) 1212 (for example, one or more processors), a memory 1232, one or more storage media 1230 (for example, one or more mass storage devices) that store an application 1242 or data 1244. The memory 1232 and the storage medium 1230 may be transient storage or persistent storage. A program stored in the storage medium 1230 may include one or more modules (not shown in the figure), and each module may include a series of instruction operations for the server. Further, the central processing unit 1212 may be configured to: communicate with the storage medium 1230, and execute, on the server 1200, the series of instruction operations in the storage medium 1230.

The server 1200 may further include one or more power supplies 1226, one or more wired or wireless network interfaces 1250, one or more input/output interfaces 1258, or one or more operating systems 1241, for example, Windows Server™, Mac OS X™, Unix™, Linux™, and FreeBSD™.

Specifically, the server may perform steps 501 to 503 in the foregoing embodiment.

An embodiment of this application further provides a computer program product. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal, and when the program runs on a computer, the computer is enabled to perform steps performed by the foregoing execution device; or the computer is enabled to perform steps performed by the foregoing training device.

An embodiment of this application further provides a vehicle. The vehicle includes a sensor, and the foregoing execution device 510, vehicle control apparatus 1010, or terminal device 1100. The sensor is configured to collect road condition information of the vehicle.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip performs the method in the foregoing embodiment performed by the foregoing execution device, or the chip performs the method in the foregoing embodiment performed by the foregoing training device. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

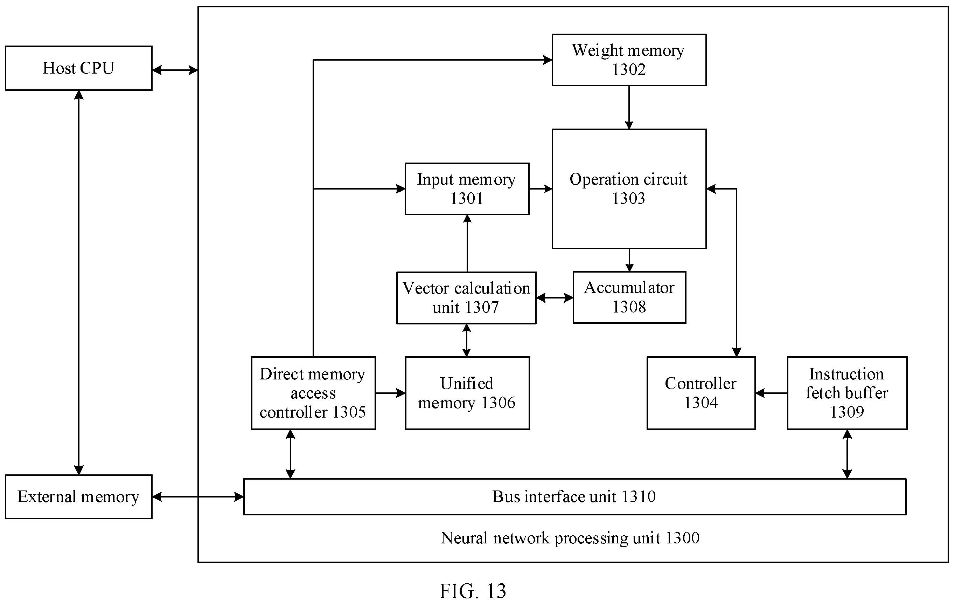

Specifically, FIG. 13 is a diagram of a structure of a chip according to an embodiment of this application. The chip may be represented as a neural network processing unit NPU 1300. The NPU 1300 is mounted to a host CPU (Host CPU) as a coprocessor, and the host CPU allocates a task. A core part of the NPU is an operation circuit 1303. A controller 1304 controls the operation circuit 1303 to extract matrix data in a memory and perform a multiplication operation.

The NPU 1300 may implement, through cooperation between internal components, the module training method provided in the embodiment described in FIG. 5.

More specifically, in some implementations, the operation circuit 1303 in the NPU 1300 includes a plurality of process engines (Process Engines, PEs) In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there are an input matrix A, a weight matrix B, and an output matrix C. The operation circuit extracts, from a weight memory 1302, data corresponding to the matrix B, and caches the data on each PE in the operation circuit. The operation circuit fetches data of the matrix A from an input memory 1301, performs a matrix operation on the data and the matrix B, and stores an obtained partial result or final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. The input data is also transferred to the unified memory 1306 through the DMAC.

A BIU (Bus Interface Unit), that is, a bus interface unit 1310, is configured to perform interaction between an AXI bus and the DMAC and between the AXI bus and an instruction fetch buffer (Instruction Fetch Buffer, IFB) 1309.

The bus interface unit 1310 (Bus Interface Unit, BIU for short) is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer input data to the input memory 1301.

A vector computing unit 1307 includes a plurality of operation processing units. If needed, further processing, for example, vector multiplication, vector addition, an exponential operation, a logarithm operation, or size comparison, is performed on an output of the operation circuit 1303. The vector computing unit 1307 is mainly configured to perform network computation at a non-convolutional/fully-connected layer in a neural network, for example, batch normalization (batch normalization), pixel-level summation, and upsampling on a feature map.

In some implementations, the vector computing unit 1307 can store a processed output vector in the unified memory 1306. For example, the vector computing unit 1307 may apply a linear function or a non-linear function to the output of the operation circuit 1303, for example, perform linear interpolation on a feature map extracted by a convolutional layer, or for another example, use a vector of accumulated values to generate an activation value. In some implementations, the vector computing unit 1307 generates a normalized value, a value obtained through pixel-level summation, or both a normalized value and a value obtained through pixel-level summation. In some implementations, the processed output vector can be used as an activation input to the operation circuit 1303, for example, used at a subsequent layer in the neural network.

The instruction fetch buffer (instruction fetch buffer) 1309 connected to the controller 1304 is configured to store

# EP 4 749 531 A1

instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A model training method, wherein the method comprises:

   obtaining road condition information of a target vehicle;
   obtaining target information based on the road condition information by using a first neural network model, wherein the target information is a driving intention prediction of the target vehicle, a driving route prediction, or an interaction behavior prediction between the target vehicle and an environment; and
   updating the first neural network model based on the target information by using an expert system or a result obtained through processing the road condition information and a label corresponding to the road condition information by the expert system.

2. The method according to claim 1, wherein
   updating the first neural network model based on the target information by using the expert system or the result obtained through processing the road condition information and the label corresponding to the road condition information by the expert system comprises:

determining a loss based on the target information and the label;
adjusting the loss based on feasibility to obtain an adjusted loss, wherein the feasibility is obtained based on the result; and
updating the first neural network model based on the adjusted loss.

3. The method according to claim 2, wherein the feasibility is a feasibility score; and
adjusting the loss based on the feasibility comprises:
adjusting the loss by using the feasibility score as a weight.

4. The method according to claim 2 or 3, wherein the feasibility is related to the following information:
safety or comfort of the target vehicle present when driving control is performed on the target vehicle based on the target information.

5. The method according to claim 1, wherein the expert system is a second neural network model, and updating the first neural network model based on the target information by using the expert system or the result obtained through processing the road condition information and the label corresponding to the road condition information by the expert system comprises:

determining a control instruction of the target vehicle based on the road condition information and the target information by using the second neural network model;
controlling, according to the control instruction, the target vehicle to interact with the environment around the vehicle, to determine an interaction result; and
updating the first neural network model based on the interaction result.

6. The method according to claim 5, wherein the method further comprises:
updating the second neural network model according to the control instruction and based on a label corresponding to the control instruction, wherein the label corresponding to the control instruction is obtained through processing the road condition information and the target information by a rule-based expert system.

7. A vehicle control method, wherein the method comprises:

obtaining road condition information of a target vehicle;
obtaining target information based on the road condition information by using an updated first neural network model obtained by using the method according to any one of claims 1 to 6, wherein the target information is a driving intention prediction of the target vehicle, a driving route prediction, or an interaction behavior prediction between the target vehicle and an environment; and
determining a control instruction of the target vehicle based on the road condition information and the target information by using an expert system.

8. A model training apparatus, wherein the apparatus comprises:

an obtaining module, configured to obtain road condition information of a target vehicle;
a processing module, configured to obtain target information based on the road condition information by using a first neural network model, wherein the target information is a driving intention prediction of the target vehicle, a driving route prediction, or an interaction behavior prediction between the target vehicle and an environment; and
an update module, configured to update the first neural network model based on the target information by using an expert system or a result obtained through processing the road condition information and a label corresponding to the road condition information by the expert system.

9. The apparatus according to claim 8, wherein the update module is specifically configured to:

determine a loss based on the target information and the label;
adjust the loss based on feasibility to obtain an adjusted loss, wherein the feasibility is obtained based on the result; and
update the first neural network model based on the adjusted loss.

10. The apparatus according to claim 9, wherein the feasibility is a feasibility score; and
the update module is specifically configured to:

adjust the loss by using the feasibility score as a weight.

11. The apparatus according to claim 9 or 10, wherein the feasibility is related to the following information:
safety or comfort of the target vehicle present when driving control is performed on the target vehicle based on the target information.

12. The apparatus according to claim 8, wherein the expert system is a second neural network model, and the update module is specifically configured to:
determine a control instruction of the target vehicle based on the road condition information and the target information by using the second neural network model; control, according to the control instruction, the target vehicle to interact with the environment around the target vehicle, to determine an interaction result; and update the first neural network model based on the interaction result.

13. The apparatus according to claim 12, wherein the update module is further configured to update the second neural network model according to the control instruction and based on a label corresponding to the control instruction, wherein the label corresponding to the control instruction is obtained through processing the road condition information and the target information by a rule-based expert system.

14. A vehicle control apparatus, wherein the apparatus comprises:

an obtaining module, configured to obtain road condition information of a target vehicle; and
a processing module, configured to: obtain target information based on the road condition information by using an updated first neural network model obtained by using the method according to any one of claims 1 to 6, wherein the target information is a driving intention prediction of the target vehicle, a driving route prediction, or an interaction behavior prediction between the target vehicle and an environment; and
determine a control instruction of the target vehicle based on the road condition information and the target information by using an expert system.

15. A computing apparatus, wherein the computing apparatus comprises a memory and a processor, the memory stores code, and the processor is configured to: obtain the code, and perform the method according to any one of claims 1 to 7.

16. A vehicle, comprising a sensor and the vehicle control apparatus according to claim 14, wherein
the sensor is configured to collect road condition information of the vehicle.

17. A computer storage medium, wherein the computer storage medium stores one or more instructions, and when the instructions are executed by one or more computers, the one or more computers are enabled to perform the method according to any one of claims 1 to 7.

18. A computer program product, comprising code, wherein when the code is executed, the method according to any one of claims 1 to 7 is performed.

19. A chip, comprising a processor, wherein the processor is configured to perform the method according to any one of claims 1 to 7.

Intelligent information chain

Intelligent product and industry application

Translation/Text analysis/...     Voice/Visual/Image/...

Data

Data processing:     Data training/Machine learning/ Deep learning     Searching/ Inference/ Decision-making     ...

Infrastructure     Sensor     Intelligent chip     Basic platform     ...

IT value chain

FIG. 1

**Driving apparatus 100**

Travel system 102
- Engine 118
- Transmission apparatus 120
- Energy source 119
- Wheel 121

Sensing system 104
- Positioning system 122
- Inertial measurement unit 124
- Radar 126
- Laser rangefinder 128
- Camera 130

Control system 106
- Steering system 132
- Throttle 134
- Brake unit 136
- Sensor fusion algorithm 138
- Computer vision system 140
- Route control system 142
- Obstacle avoidance system 144
- Expert system 145

Peripheral device 108
- Wireless communication system 146
- Vehicle-mounted computer 148
- Microphone 150
- Speaker 152

Power supply 110

User interface 116

Computer system 112
- Processor 113
- Memory 114
  - Instructions 115

FIG. 2

24

Data collection device 5<u>60</u>

Data flow

Database 5<u>30</u>

Training device 5<u>20</u>

500

Data flow

Execution device 5<u>10</u>

Client device 5<u>40</u>

Input data

I/O interface 5<u>12</u>

Target model/rule 5<u>01</u>

Computing module 5<u>11</u>

Data storage system 5<u>50</u>

Output result

Preprocessing module 5<u>13</u>

Preprocessing module 5<u>14</u>

FIG. 3

FIG. 4

Obtain road condition information of a target vehicle 501

Obtain target information based on the road condition information by using a first neural network model, where the target information is a driving intention prediction of the target vehicle, a driving route prediction, or an interaction behavior prediction between the target vehicle and an environment 502

Update the first neural network model based on the target information by using an expert system or a result obtained through processing the road condition information and a label corresponding to the road condition information by the expert system 503

FIG. 5

Lane change preparation    Lane change phase    Lane keeping

FIG. 6

$$[x, y, s, a, s']$$

$[x, y]$ → Planning and control expert system → Reward model → $[x, y, r]$

FIG. 7

$x$ → Offline training model → $u$ → Planning and control expert system → $a$

FIG. 8

Exploration of u

Exploration of a

$x$ → First neural network model → $u$ → Second neural network model → $a$ → Simulation environment [ Vehicle → Traffic information ]

Reinforcement learning ← Reward model

FIG. 9

1000

1001 — Obtaining module — 1002 — Processing module

1003 — Update module

FIG. 10A

1010

1011

1012

Obtaining module —•——•— Processing module

FIG. 10B

1100

Terminal device

Antenna                                    Antenna

| Receiver 1101 | Transmitter 1102 |

Processor 1103

| Memory 1104 | Application processor 11031 | Communication processor 11032 |

FIG. 11

FIG. 12

Host CPU

External memory

Neural network processing unit 1300

Weight memory 1302

Operation circuit 1303

Accumulator 1308

Controller 1304

Instruction fetch buffer 1309

Input memory 1301

Vector calculation unit 1307

Unified memory 1306

Direct memory access controller 1305

Bus interface unit 1310

FIG. 13

## INTERNATIONAL SEARCH REPORT

International application No.

**PCT/CN2024/110625**

| A. | CLASSIFICATION OF SUBJECT MATTER |
|---|---|

G06N 3/084(2023.01)i

According to International Patent Classification (IPC) or to both national classification and IPC

| B. | FIELDS SEARCHED |
|---|---|

Minimum documentation searched (classification system followed by classification symbols)

    IPC:G06N

Documentation searched other than minimum documentation to the extent that such documents are included in the fields searched

Electronic data base consulted during the international search (name of data base and, where practicable, search terms used)

    VEN, CNABS, CNTXT, WOTXT, EPTXT, USTXT, CNKI, IEEE: 训练, 模型, 路况, 车辆, 神经网络, 权重, 驾驶, 预测, 更新, 环境, 专家, 标签, 损失, training, model, road, condition, vehicle, neural network, weight, driving, prediction, update, environment, expert, label, loss

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113835421 A (HUAWEI TECHNOLOGIES CO., LTD.) 24 December 2021 (2021-12-24) claims 1-40, and description, paragraphs [0108]-[0446] | 1-19 |
| Y | CN 115687764 A (BEIJING BAIDU NETCOM SCIENCE AND TECHNOLOGY CO., LTD.) 03 February 2023 (2023-02-03) claims 1-27, and description, paragraphs [0044]-[0152] | 1-19 |
| A | CN 110889558 A (CENNAVI TECHNOLOGIES CO., LTD.) 17 March 2020 (2020-03-17) entire document | 1-19 |
| A | CN 114802258 A (BEIJING XIAOMI MOBILE SOFTWARE CO., LTD.) 29 July 2022 (2022-07-29) entire document | 1-19 |
| A | WO 2022197252 A1 (NANYANG TECHNOLOGICAL UNIVERSITY) 22 September 2022 (2022-09-22) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 October 2024** | **22 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110625**

| Patent document cited in search report | | | Publication date (day/month/year) | Patent family member(s) | | | Publication date (day/month/year) |
|---|---|---|---|---|---|---|---|
| CN | 113835421 | A | 24 December 2021 | WO | 2021244207 | A1 | 09 December 2021 |
| CN | 115687764 | A | 03 February 2023 | None | | | |
| CN | 110889558 | A | 17 March 2020 | None | | | |
| CN | 114802258 | A | 29 July 2022 | None | | | |
| WO | 2022197252 | A1 | 22 September 2022 | US | 2024160945 | A1 | 16 May 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311018397